# FASCICULE DE BREVET EUROPEEN

(11) **EP 1 201 046 B1**
(45) Date de publication et mention de la délivrance du brevet: **15.12.2004**
(21) Numéro de dépôt: 00949574.8
(22) Date de dépôt: 29.06.2000
(51) Int. Cl.: H04B 7/185, H04B 7/005

(54) **PROCEDE ET SYSTEME DE TELECOMMUNICATION PAR SATELLITES DEFILANTS DANS LEQUEL LES COMMUNICATIONS SONT TRANSFERABLES D'UN SATELLITE A UN AUTRE**
KOMMUNIKATIONSSYSTEM UND VERFAHREN FÜR SATELLITEN MIT NIEDRIGER UMLAUFBAHN MIT WEITERREICHEN EINER KOMMUNIKATION ZWISCHEN SATELLITEN
TELECOMMUNICATION METHOD AND SYSTEM VIA MOVING SATELLITES WHEREIN COMMUNICATIONS ARE TRANSFERABLE FROM ONE SATELLITE TO ANOTHER

(30) Priorité: 08.07.1999 FR 9908843
(43) Date de publication de la demande: 02.05.2002
(73) Titulaire: ALCATEL, 75008 Paris (FR)
(72) Inventeur: CALOT, Guillaume, F-78000 Versailles (FR); BOUDJEMA, Eric, F-92100 Boulogne (FR); ROUFFET, Denis, F-92100 Boulogne Billancourt (FR); PALMADE, Jean-Luc, F-31790 Saint-Jory (FR); PIAU, Pascal, F-31120 Lacroix Falgarde (FR); PELIGRY, Yves, F-75004 Paris (FR)
(74) Mandataire: Grynwald, Albert
(86) Numéro de dépôt international: PCT/FR2000/001824
(87) Numéro de publication internationale: WO 2001/005063

(56) Documents cités:
- EP-A- 0 536 033
- EP-A- 0 720 308
- EP-A- 0 808 034
- WO-A-98/29968
- US-A- 5 537 679
- US-A- 5 625 867
- WIEDEMAN R A ET AL: "THE GLOBALSTAR MOBILE SATELLITE SYSTEM FOR WORLDWIDE PERSONAL COMMUNICATIONS" PROCEEDINGS OF THE INTERNATIONAL MOBILE SATELLITE CONFERENCE, 1 janvier 1993 (1993-01-01), XP000500171
- ROUFFET D: "SKYBRIDGE: SYSTEM DESCRIPTION" ELECTRICAL COMMUNICATION,BE,ALCATEL. BRUSSELS, no. QUART. 4TH, 1998, pages 269-275, XP000832244 ISSN: 0013-4252

## Description

L'invention est relative à un procédé et à un système de télécommunication faisant appel à des satellites défilants.

Jusqu'à une période récente, les télécommunications effectuées par l'intermédiaire de satellites ont été réalisées principalement à l'aide de satellites géostationnaires. Mais de tels systèmes présentent deux inconvénients gênants, à savoir, d'une part, une couverture terrestre relativement limitée et, d'autre part, surtout un temps de propagation des signaux qui n'est pas toujours compatible avec des communications en temps réel. En effet, l'altitude d'un satellite géostationnaire étant de 36 000 km, la durée minimale d'un trajet de signal de la terre vers le satellite et du satellite vers la terre est de 250 ms environ. En outre, cette distance entraîne des pertes de propagation en espace libre qui ne sont pas favorables à une grande capacité.

Afin d'augmenter la couverture des systèmes de transmission par satellites et, surtout, de réduire le temps de propagation, on a développé des systèmes de télécommunication à constellation de satellites à orbites basses ou moyennes. Les altitudes des orbites de ces satellites sont comprises entre 800 et 1500 km et ces orbites sont choisies de façon telle que pratiquement toute la surface terrestre soit couverte, c'est-à-dire qu'à chaque instant n'importe quel point de la terre (à l'exception quelques fois des zones polaires) voit au moins un satellite.

Les satellites étant défilants, chaque point de la terre ne voit un même satellite que pendant un temps limité, au maximum de l'ordre de 15 minutes. Dans ces conditions, le système de télécommunications est tel que lorsque, pour un usager terrestre, un satellite quitte la zone de visibilité, il existe un autre satellite pour prendre le relais de la communication.

Le transfert d'une même communication d'un satellite vers un autre est quelques fois appelé "Hand-Over" ou "Hand-Off".

Dans les systèmes de télécommunications du type à satellites défilants connus jusqu'à présent, ce transfert s'effectue individuellement pour chaque terminal. A cet effet, on prévoit dans chaque terminal, c'est-à-dire dans chaque équipement destiné à recevoir et émettre des communications, un moyen de détection de la qualité de communication, par exemple le rapport signal à bruit, entre le terminal et les satellites en vue. Des moyens de contrôle ou de gestion, par exemple dans une station centrale, commandent le transfert des communications émises et reçues par le terminal d'un premier satellite vers un second satellite quand la qualité des communications transmises par le premier satellite descend au-dessous d'un seuil prédéterminé et quand la qualité des communications réalisées par l'intermédiaire du second satellite est supérieure à ce seuil. Le document US-A-5 625 867 représente l'état de la technique le plus proche. Il décrit les caractéristiques des préambules des revendications 1 et 14.

L'invention résulte de la constatation que ce type de transfert effectué individuellement pour chaque terminal pose des problèmes difficilement solubles de gestion de l'attribution des ressources en communications. En effet, dans un système de télécommunications, les ressources en communications sont intrinsèquement limitées et doivent en permanence être gérées de façon telle que le système puisse transmettre un maximum de données ou de communications.

Par "ressources", on entend, d'une part, la puissance des émissions et, d'autre part, les caractéristiques des signaux transmis permettant, en permanence, un grand nombre de communications simultanées. On sait qu'à cet effet, on peut utiliser la polarisation, diverses fréquences porteuses, un multiplexage dans le temps et divers codes. Le multiplexage dans le temps est appelé "TDMA" (ce qui correspond à "Time Division Multiple Access") alors que la répartition des signaux selon des codes est notée "CDMA" ("Code Division Multiple Access").

Ainsi, à chaque transfert des communications d'un terminal d'un satellite Vers un autre, les moyens de gestion du système de télécommunications doivent redistribuer, grâce à un programme complexe, les ressources, notamment parce qu'à l'occasion de ce transfert pratiquement tous les paramètres de la communication ont pu changer, à savoir la puissance, la fréquence porteuse, le temps et/ou le code ainsi que la polarisation. Cette complexité de gestion augmente bien entendu avec le nombre d'usagers du système de télécommunications.

L'invention remédie à ces inconvénients.

Elle est caractérisée en ce que le système de télécommunications étant tel que le domaine des communications étant divisé en zones terrestres, à l'intérieur de chaque zone on commande les périodes de transfert des terminaux immobiles (fixes) dans la zone en faisant appel aux données préétablies concernant les moments pendant lesquels, dans la zone, ou dans une partie de la zone, au moins deux satellites sont simultanément visibles. Par exemple, un satellite s'éloigne de la zone et l'autre se rapproche de cette zone.

Autrement dit, l'invention fait appel au caractère déterministe, c'est-à-dire connu à l'avance, des orbites de satellites, et des moments de leurs pointages vers la zone considérée.

Ainsi, les transferts de communications sont gérés de façon collective pour une pluralité des terminaux afin de répartir au mieux les ressources en communications. En outre, la période de visibilité commune de deux satellites étant connue à l'avance, il n'est pas nécessaire d'effectuer en permanence une surveillance de la présence d'un deuxième satellite.

L'invention est particulièrement utile dans le cas d'un système de télécommunication pour lequel les zones terrestres sont fixes et non mobiles car, dans ce cas, le nombre de transferts à effectuer simultanément est important.

Dans un mode de réalisation pour lequel les terminaux et/ou la station centrale et/ou les satellites comportent des antennes directives, on met à profit les données préétablies concernant les moments pendant lesquels, dans la zone, ou dans une partie de la Zone, au moins deux satellites sont simultanément visibles, pour pointer un deuxième jeu d'antenne(s) vers le satellite qui devra prendre le relais des communications.

Il est à noter que dans le cas où l'on fait appel à de telles antennes directives, on peut, dans un même terminal, ou dans une même station centrale, utiliser simultanément les mêmes fréquences si les deux satellites émettent des faisceaux qui sont suffisamment séparés angulairement.

Les périodes de transfert d'un satellite à un autre sont commandées de façon à pouvoir être étalées entre tous les terminaux pendant la période de double visibilité. On peut ainsi étaler sur cette période la puissance de traitement nécessaire pour effectuer les transferts ainsi que les échanges correspondants de signalisation entre les terminaux et le réseau.

Dans'une réalisation, les périodes individuelles de transfert sont réparties de façon qu'à chaque instant les ressources utilisées par chaque satellite restent sensiblement constantes.

La répartition programmée à l'avance des transferts peut être combinée avec une gestion en temps réel, sur une base individuelle, des diverses communications.

En effet, il peut être nécessaire, dans certains cas particuliers, de s'écarter de la période collective de transfert pour chaque terminal. A titre d'exemple, on citera ici une liaison devenant défectueuse pour un terminal, ou un ensemble de terminaux, en raison d'un obstacle dans la transmission entre le terminal et le satellite.

A titre d'exemple encore, il peut aussi se produire des pointes de trafic qui entraînent la nécessité temporaire d'effectuer une répartition des ressources entre satellites s'écartant de la répartition préprogrammée. Toutefois, cette possibilité d'écart par rapport à la gestion préprogrammée étant relativement peu fréquente, cette gestion préprogrammée conserve tous les avantages mentionnés ci-dessus.

L'invention concerne, selon un autre de ses aspects, qui peut être utilisé indépendamment des aspects mentionnés ci-dessus, des dispositions facilitant le transfert de communications d'un satellite vers un autre.

Une première de ces autres dispositions consiste à subdiviser l'ensemble des ressources en fréquences porteuses en sous-ensembles disjoints tels que lors du transfert d'une communication d'un satellite vers un autre, les ressources en porteuses de ces deux communications appartiennent au même sous-ensemble.

Ainsi le groupement de ces porteuses en sous-ensembles facilite sensiblement la gestion des transferts de communications et la réalisation de la station de gestion prévue dans chaque zone. Cette station comporte notamment, un moyen d'attribution des porteuses qui constitue, en quelque sorte, un aiguillage des moyens de communication, et la séparation des porteuses en sous-ensemble permet de subdiviser le moyen d'aiguillage en autant d'organes qu'il existe de sous-ensembles. Ainsi, chaque organe d'aiguillage est de réalisation plus simple qu'un organe d'aiguillage devant traiter simultanément l'ensemble des porteuses.

L'invention concerne aussi, selon un aspect qui peut également s'utiliser indépendamment des autres aspects expliqués ci-dessus, le niveau où s'effectue la séparation entre les données d'une communication afin d'effectuer le transfert.

De préférence, le niveau où s'effectue la séparation entre les données d'une communication afin d'effectuer le transfert d'un satellite vers un autre est situé en aval du multiplexage des cellules (ou de façon générale, des signaux d'utilisateurs) et, dans ce cas, on transfère les communications d'une porteuse prévue pour un satellite sur une autre porteuse prévue pour un autre satellite. Ce transfert est particulièrement simple à effectuer et est bien adapté au transfert d'une multiplicité de communications.

Le multiplexage des cellules ou paquets consiste à répartir ces dernières en trames comprenant 16 intervalles de temps (un intervalle de temps correspondant à la durée d'une cellule) et, pendant chaque intervalle de temps, on prévoit de transmettre une pluralité de cellules. Les diverses cellules qui sont affectées au même intervalle de temps se distinguent les unes des autres par une ressource, c'est-à-dire par exemple par leurs codes, leurs intervalles de temps ou par leurs fréquences porteuses.

Dans ce qui suit, on supposera que les cellules, ou paquets, se distinguent par leurs codes et/ou intervalles de temps.

Quand on effectue un tel transfert à l'aval du multiplexage, on prévoit un seul mécanisme d'attribution des ressources aux cellules. Toutefois, il faut, sur chaque chemin, prévoir un contrôle de puissance car les atténuations dues à la transmission peuvent différer d'un chemin à un autre.

Avec ce type de transfert, il peut être préférable de prévoir une transmission simultanée sur les deux chemins des communications pendant un intervalle de temps de cellule. En effet, cette période de transition est mise à profit pour régler la puissance sur le nouveau chemin car les ressources étant les mêmes sur les deux chemins, avant le transfert on transmet les cellules de la trame courante avec une puissance donnée sur le premier chemin et une puissance nulle sur le second chemin, et, après le transfert, on transmet les cellules avec une puissance nulle sur le premier chemin. Ainsi, sur les deux chemins, il est préférable d'assurer une transition douce de la ressource en puissance. Dans ces conditions, il est nécessaire que, pendant cet intervalle de temps de transition, les ressources soient dupliquées, une fréquence porteuse étant attribuée à un chemin et une autre fréquence porteuse à l'autre chemin.

En outre, étant donné que les cellules sont attribuées collectivement pour les deux chemins, il faut donc, en plus, satisfaire une condition supplémentaire, à savoir que, sur chaque chemin et au cours d'un même intervalle de temps de cellule, la somme des puissances des diverses cellules ne dépasse pas le maximum autorisé.

Dans ces conditions, on comprend que l'instant du transfert dépend de l'emplacement du terminal.

L'invention prévoit, de façon générale, un procédé de télécommunications selon la revendication 1.

Selon un mode de réalisation, les transferts de communications des terminaux d'un satellite vers un autre sont commandés à partir de la station de gestion.

Selon un mode de réalisation, les instants des transferts sont répartis de façon que les ressources utilisées par chacun des satellites soient sensiblement les mêmes.

Les moments de transfert des communications d'un satellite vers un autre sont par exemple prédéfinis pour chaque terminal.

Selon un mode de réalisation, on surveille les qualités des communications de chaque terminal et, si la qualité de communication pour un terminal descend en dessous d'un seuil prédéterminé, par exemple en raison d'un masquage, on anticipe le transfert de la communication vers l'autre satellite.

Selon un mode de réalisation, on anticipe le transfert de la communication vers l'autre satellite si cet autre satellite permet une capacité de communication supérieure à celle du premier satellite.

Les zones terrestres sont de préférence fixes.

Selon un mode de réalisation, les ressources attribuées à un terminal, pour un satellite, comprennent une fréquence porteuse et une pluralité de codes, notamment des séquences de Hadamard, et/ou des intervalles de temps.

Dans une réalisation, on prévoit dans chaque terminal et/ou la station de gestion, un seul moyen d'attribution des ressources, et ces ressources sont dédoublées pendant la période de transfert.

Selon un mode de réalisation, deux cellules ou paquets, ou autres signaux, destinés à être transmis simultanément par l'intermédiaire de deux satellites différents présentent des fréquences porteuses différentes et, de préférence, les mêmes codes.

Selon un mode de réalisation, avant le transfert, on attribue une puissance nulle aux signaux du deuxième chemin et après le transfert, on attribue une puissance nulle aux signaux du premier chemin.

Selon un mode de réalisation, pendant une période de transition, par exemple égale à un intervalle de cellule ou paquet, on attribue des puissances non nulles aux deux ensembles de cellules ou paquets.

Selon un mode de réalisation, on contrôle les puissances attribuées aux cellules ou paquets dédoublés.

La présente invention prévoit aussi une station de gestion selon la revendication 14.

Selon un mode de réalisation, la station de gestion comporte un dispositif d'attribution des fréquences porteuses aux terminaux, ces fréquences porteuses étant réparties selon des ensembles disjoints, un transfert d'une communication d'un satellite à un autre s'effectuant en choisissant les deux porteuses de la communication dans le même sous-ensemble.

D'autres caractéristiques et avantages de l'invention apparaîtront avec la description de certains de ses modes dé réalisation, celle-ci étant effectuée en se référant aux dessins ci-annexés sur lesquels :
la figure 1 est un schéma d'un système de télécommunication auquel s'applique l'invention,
les figures 2a à 2f sont des schémas montrant diverses situations de visibilité de satellites et de périodes de transfert effectué selon le procédé conforme à l'invention,
la figure 3a représente une zone d'un système du type de celui de la figure 1 avec des traces de faisceaux émis par plusieurs satellites,
la figure 3b est un diagramme analogue à ceux représentés sur les figures 2a à 2f et correspondant à la situation présentée sur la figure 3a,
la figure 4 est un diagramme montrant un exemple de programmation des faisceaux émis par les moyens d'émission/réception à bord de satellites du système représenté sur la figure 1,
la figure 5 est un schéma montrant un exemple de répartition de fréquences porteuses dans le procédé conforme à l'invention, et
la figure 6 est un schéma d'une station de gestion du système de la figure 1 et faisant appel au procédé représenté sur la figure 5, et
la figure 7 est un schéma montrant un exemple de niveau où peut s'effectuer le transfert dans un terminal ou une station de gestion.

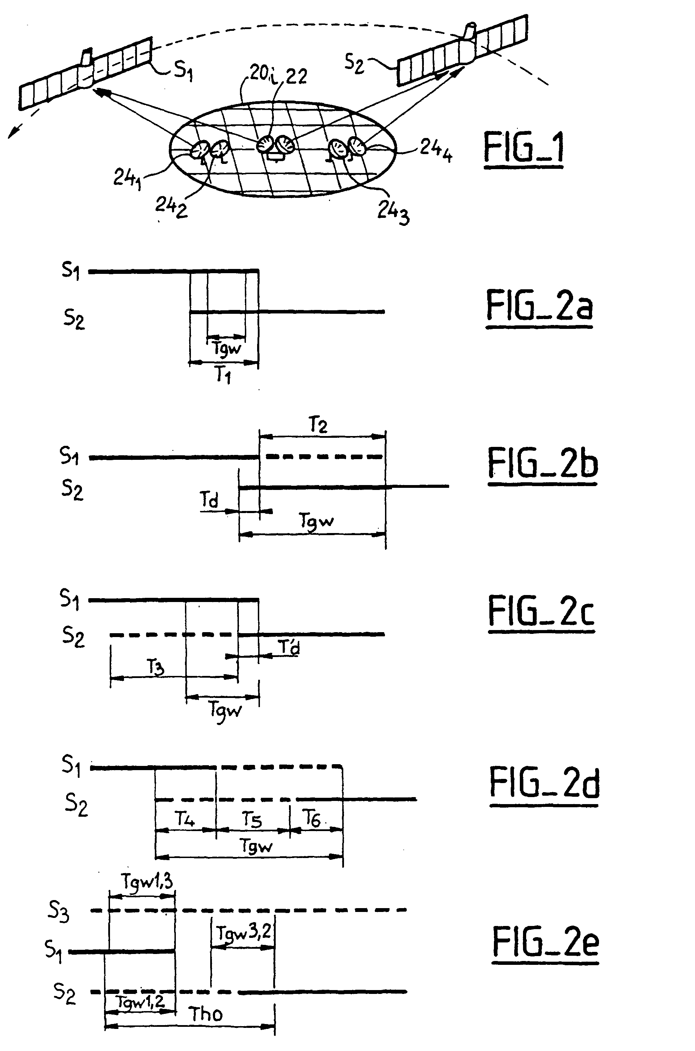

L'exemple de réalisation de l'invention qui va être maintenant décrit avec les figures se rapporte à un système de télécommunications dans lequel on prévoit une pluralité, ou constellation, de satellites dont les orbites ont une altitude de 1 450 km environ au-dessus de la surface terrestre. Cette dernière est divisée en zones sensiblement circulaires de 700 km de diamètre. À l'intérieur de chaque zone 20ᵢ (figure 1), on prévoit une station de gestion 22, par exemple en position centrale dans la zone, et une pluralité de terminaux 24₁, 24₂, 24₃, 24₄, etc. La station de gestion 22 est reliée à un réseau de communication de type terrestre ou autre (non montré).

Toutes les communications émises ou reçues par un terminal 24ᵢ transitent par la station de gestion 22 et les communications entre chaque terminal et la station 22 s'effectuent par l'intermédiaire d'un satellite S₁ ou S₂. Autrement dit, dans l'exemple représenté sur la figure 1, une communication entre un terminal 24ᵢ et un abonné du réseau auquel est relié la station 22 transite par un satellite S₁ ou S₂ et par la station de gestion 22 ; une communication entre un terminal 24₁ et un autre terminal 24₃ ou 24₄, éloigné du terminal 24₁, transite par le satellite S₁, la station 22 et le satellite S₂ ou S_{1.}

À l'intérieur de chaque satellite, on prévoit des équipements (non montrés) pour la réception et la réémission des communications qui sont mis en service de façon préprogrammée. Dans un exemple, chaque satellite présente des moyens de commande pour "illuminer" plusieurs zones terrestres à la fois et la commande est telle qu'au cours de son déplacement le satellite modifie le faisceau de façon à ce qu'il atteigne toujours la zone considérée pendant son parcours actif au-dessus de la zone. La durée d'un tel parcours est d'environ 15 minutes au maximum.

Étant donné que la période de visibilité, par une zone, d'un satellite est limitée, il est nécessaire d'agencer la constellation de satellites de façon telle que lorsqu'un satellite est proche de la fin de sa période de visibilité, il doit être remplacé par un autre satellite qui prendra le relais de la communication. Ce système de télécommunications étant destiné, en général, à des communications de haute qualité, il est nécessaire de prévoir des moyens pour que la qualité des communications ne soit pas affectée par leur transfert d'un satellite vers un autre. Autrement dit, le systéme est organisé de façon telle qu'au moins au moment où un satellite assurant une communication est proche de quitter sa zone de visibilité, un autre satellite soit simultanément dans la zone de visibilité et le restera quand le premier ne sera plus visible.

Dans une réalisation, la visibilité est prédéterminée en fonction de l'élévation du satellite par rapport à la station de gestion 22 et par rapport à chaque terminal 24ᵢ. L'élévation minimale pour que la station de gestion voit le satellite est de 5° et l'élévation minimale pour qu'un terminal voit un satellite est de 10°. Dans cette réalisation, en raison des dimensions de la zone et de l'altitude des satellites, quand le satellite a une élévation de 14,4° par rapport à la station 22, tous les terminaux 24ᵢ de la zone voient ce satellite. Par contre, quand l'élévation du satellite par rapport à la station 22 est inférieure à 6,1°, aucun terminal ne voit le satellite.

Ainsi, quand l'élévation du satellite par rapport à la station 22 est comprise entre 6,1 et 14,4°, seule une partie de la zone 20ᵢ pourra voir le satellite.

Étant donné le coût élevé de chaque satellite et des équipements à son bord, il est nécessaire d'en limiter le nombre. C'est pourquoi, il n'est en général pas possible de prévoir que, dans toutes les zones 20_{i,} un satellite dont l'élévation commence à diminuer pour se rapprocher de la valeur de 14,4° par rapport à la station de gestion, un autre satellite présente une élévation d'au moins cette valeur par rapport à cette même station et garde cette élévation minimale ou une élévation supérieure après que l'élévation du satellite descendant soit descendue au-dessous de 14,4°. Autrement dit, il n'est pas toujours possible de prévoir qu'un satellite visible de tous les terminaux de la zone soit remplacé immédiatement par un autre satellite visible par tous les terminaux de cette zone.

En fait, comme on le verra plus loin, des situations très diverses peuvent se présenter pendant lesquelles les mécanismes de transfert d'un satellite sur un autre doivent intervenir. Toutefois, les moyens de gestion du système de télécommunication doivent être tels qu'ils tiennent compte de toutes ces possibilités afin de commander l'allumage, ou activation, des moyens de réception et de réémission à bord de chaque satellite.

L'invention met à profit l'existence de cette gestion du système pour commander le transfert des diverses communications d'un satellite sur un autre afin d'optimiser à tout instant la gestion des ressources en communication.

A cet effet, le transfert des communications depuis chaque terminal et/ou chaque station de gestion, s'effectue par une commande centralisée, dans la station de gestion, qui détermine les transferts en fonction de la programmation préalable de l'activation des moyens de réception et de réémission à bord de chaque satellite.

De cette manière, pendant le transfert, la gestion des ressources en communications peut être équilibrée.

Pour les transferts on prévoit dans chaque terminal deux antennes directives dont l'une est pointée vers le satellite courant et dont l'autre est, avant le transfert, pointée vers le satellite qui va prendre le relais.

Il est à noter que, dans ce système de télécommunication où les pinceaux émis par les satellites sont fixes sur les zones terrestres les transferts doivent s'effectuer simultanément pour un grand nombre de terminaux et pendant une période relativement courte. En outre, les transferts ne sont pas répartis dans le temps mais sont sporadiques.

On a représenté sur les figures 2a à 2f diverses possibilités de transferts de communications d'un satellite à un autre. Sur chacun de ces schémas, chaque ligne représente l'élévation d'un satellite en fonction du temps t. Une ligne en trait plein correspond à un satellite dont l'élévation par rapport à la station de gestion est supérieure à 14,4° alors qu'une ligne en traits interrompus correspond à une élévation par rapport à cette station de gestion comprise entre 6,1 et 14,4°.

Dans l'exemple représenté sur la figure 2a, il existe une période T₁ pendant laquelle l'élévation des deux satellites S₁ et S₂ est simultanément supérieure à 14,4°. Toutefois, le système est tel que les transferts de communications du satellite descendant S₁ vers le satellite montant S₂ s'effectuent dans une partie T_{gW} de cette période T₁.

Ce transfert de communications est, par exemple, commandé depuis la. station de gestion de la zone. Dans ce cas, on commande le transfert de tous les terminaux de la zone du satellite S₁ vers le satellite S₂ pendant le temps T_{gW}.

Cette commande collective permet de gérer au mieux la distribution des ressources en communications et la distribution des puissances, ces distributions concernant tant les terminaux de la zone que les satellites et l'ensemble du système de télécommunications. On peut, par exemple, répartir uniformément, sur la période T_{gW}, les divers transferts des terminaux.

Dans l'exemple, chaque terminal comporte deux antennes directives mobiles de façon à suivre les satellites. En dehors des périodes de transfert l'une des deux antennes est inutilisée. Cette antenne inutilisée est, avant le transfert, pointée vers le satellite S_{2.}

Dans la situation représentée sur la figure 2b, le satellite S₁ descendant présente une élévation comprise entre 6,1° et 14,4° pour une période T₂ au cours de laquelle le satellite montant S₂ présente une élévation supérieure à 14,4°. En outre, pendant une période T_{d} précédant la période T₂, les satellites S₁ et S₂ présentent tous deux une élévation supérieure à 14,4°. Dans ce cas, la période de transfert peut s'effectuer pendant une période T_{gW} égale à la somme des périodes T_{d} et T₂.

Il est à noter que pendant la période T_{d}, les terminaux pour lesquels on commande le transfert des communications de S₁ vers S₂ sont au moins ceux pour lesquels le satellite S₁ présente une élévation insuffisante au cours de la période T₂.

La situation représentée sur la figure 2c est analogue à celle de la figure 2b. Elle s'en distingue seulement par le fait que c'est le satellite S₂ montant qui présente une période T₃ , située au début de sa période de visibilité au-dessus de la zone, au cours de laquelle son élévation est comprise entre 6,1 et 14,4°. Les deux satellites ont une élévation supérieure à 14,4° pendant une période T'_{d} située à la fin de la période de visibilité du satellite S₁. La période T_{gW} de commande des transferts s'effectue pendant une partie de la période T₃ et pendant la période T'_{d}.

Dans l'exemple représenté sur la figure 2d, il n'existe pas de période au cours de laquelle les deux satellites S₁ et S₂ présentent simultanément une élévation supérieure à 14,4°. Par contre, les deux satellites sont constamment visibles depuis la station de gestion pendant une période T_{gW} qui comprend une première période T₄ au cours de laquelle le satellite S₁ a une élévation supérieure à 14,4° par rapport à la station de gestion, mais le satellite S₂ a une élévation inférieure à 14,4° (mais supérieure à 6,1°). Au cours de la seconde période T₅, les deux satellites présentent des élévations comprises entre 6,1 et 14,4° et, enfin, au cours de la troisième période T₆, l'élévation du satellite S₁ est comprise entre 6,1° et 14,4° et celle du satellite S₂ est supérieure à 14,4°. Dans ce cas, comme dans celui des figures 2b et 2c, les transferts peuvent s'effectuer progressivement pour les divers terminaux.

Dans l'exemple représenté sur la figure 2e, il n'existe pas de période de visibilité commune permettant le transfert de toutes les communications du satellite descendant S₁ vers le satellite montant S₂.

Dans ce cas, on fait appel à un troisième satellite S₃ qui, dans cet exemple, présente au cours de la période de transfert Tₕₒ, une élévation comprise entre 6,1 et 14,4°. En outre, les visibilités, à partir de la zone, des satellites S₁, S₂ et S₃ sont telles que pendant une période T_{gW1,2}, on effectue le transfert des communications du satellite S₁ vers le satellite S₂ pour ceux des terminaux qui se trouvent dans la partie de la zone qui est visible du satellite S₂ et du satellite S₁ et qui resteront visibles du satellite S₂.

Pendant une période T_{gW1,3} qui, dans cet exemple, est simultanée à la plus grande partie de la période T_{gW1,2} on transfère les communications de S₁ vers S₃ pour les terminaux se trouvant dans la partie restante de la zone, visible de ces deux satellites. Dans ce cas, bien entendu, cette partie restante reste visible du satellite S₃ jusqu'au début de la période au cours de laquelle le satellite S₂ présente une élévation supérieure à 14,4°. Le transfert des communications de ces terminaux du satellite S₃ vers le satellite S₂ s'effectue au cours d'une période T_{gW3,2} qui, dans cet exemple, est disjointe des périodes T_{gW1,2} et T_{gW1,3}.

Dans l'exemple représenté sur la figure 2f, le transfert, pendant une période Tₕₒ, d'un satellite S₁ vers un satellite S₄ fait intervenir deux autres satellites S₂ et S₃. Le transfert des diverses parties de la zone s'effectue d'abord de S₁ vers S₂ au cours d'une période T_{gW1,2} et pour une autre partie de la zone, du satellite S₁ vers le satellite S₃ au cours d'une période T_{gW1,3}. Les transferts de S₂ vers S₄ et de S₃ vers S₄ s'effectuent au cours de périodes, respectivement, T_{gW2,4}, T_{gW3,4}.

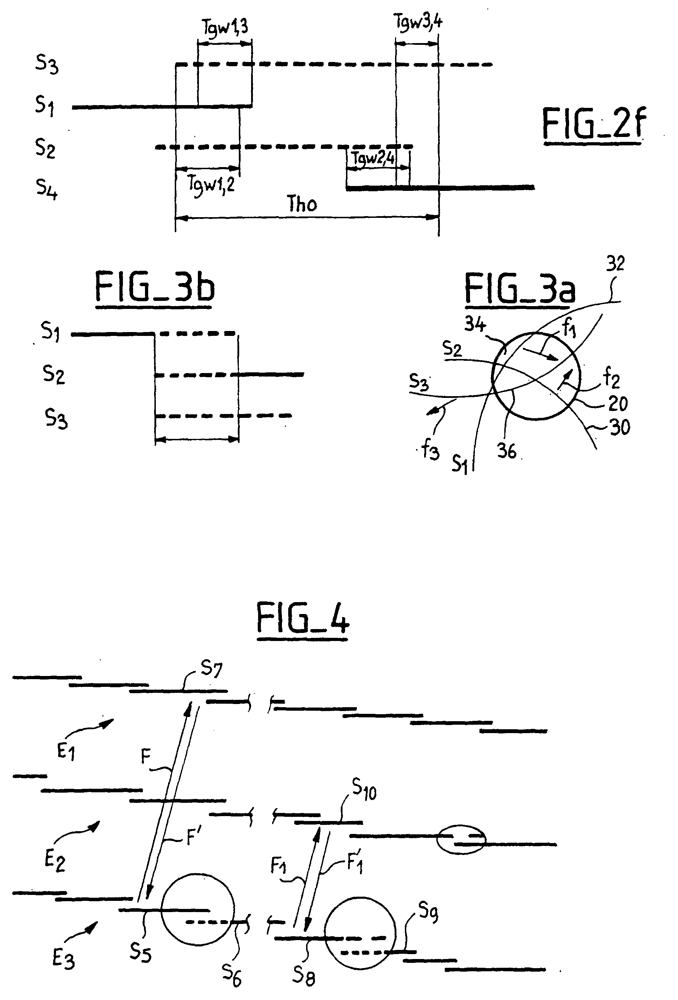

Pour mieux faire comprendre les diverses situations pouvant intervenir au niveau de la zone, on a représenté sur la figure 3a une zone terrestre 20 et les traces des faisceaux des antennes de trois satellites S₁, S₂ et S₃ sur la zone et au voisinage de celle-ci. On a également représenté sur la figure 3b, un diagramme de visibilité des satellites dans une forme analogue aux diagrammes des figures 2a à 2f.

Dans la situation représentée sur la figure 3a, le faisceau des antennes du satellite S₂ montant occupe la partie de la zone 20 qui se trouve du côté concave de la ligne 30 représentant le bord du faisceau du signal émis par le satellite S₂. En outre, à cet instant, le satellite S₁ illumine la partie de la zone 20 qui se trouve du côté de la partie concave de la ligne 32. On voit ainsi que, dans cette situation, il existe une région 34 qui n'est couverte ni par le satellite S₁ ni par le satellite S₂ mais par le satellite S₃ dont le bord du faisceau est représenté par la ligne 36.

Les flèches f₁, f₂ et f₃ correspondent au sens de déplacement des faisceaux des satellites, respectivement S₁, S₂ et S₃. On comprend qu'avant que la région 34 ne soit plus couverte par le faisceau du satellite S₁, on a effectué un transfert des communications des terminaux correspondants vers le satellite S₃ et, ensuite, quand cette région 34 est couverte par le faisceau du satellite S₂, on effectue le transfert des communications des terminaux de cette région vers le satellite S₂.

Sur le diagramme de la figure 4, les divers segments horizontaux représentent chacun une période de visibilité d'un satellite déterminé pour une zone. Dans la pratique, les moyens à bord des satellites sont commandés pour illuminer la zone correspondant aux périodes indiquées.

Ce diagramme représente une planification effectuée par exemple sur une période de trente heures, dans la station de gestion.

Sur ce diagramme les divers segments, c'est à dire les divers passages des satellites au-dessus de la zone considérée ont été regroupés en trois ensembles E₁, E₂ et E₃. Chaque ensemble constitue en quelque sorte, un chemin permettant une continuité des communications dans le temps malgré l'apparition et la disparition des satellites.

Dans l'ensemble E_{1,} les communications peuvent à chaque fois être transférées d'un satellite vers le suivant. Il en est de même dans l'ensemble E₂. Par contre dans l'ensemble E₃, il existe des parties de la zone pour lesquelles les terminaux ne peuvent passer d'un satellite de cet ensemble à un satellite du même ensemble. Il en est ainsi par exemple du satellite S₅ vers le satellite S₆. Dans ce cas, les communications des terminaux qui ne pourront pas être transférées du satellite S₅ vers le satellite S₆ sont transférées du satellite S₅ vers le satellite S₇ pour l'ensemble E₁ (flèche F), et les communications de ces terminaux se poursuivront sur l'ensemble E₁.

Pour équilibrer la charge on peut alors transférer vers le chemin E₃ les communications de terminaux qui sont affectés au chemin E₁, ces communications de terminaux pouvant bien entendu être alors transférées (du fait de la position géographique des terminaux) du satellite S₅ vers le satellite S₆ (flèche F').

De même dans l'ensemble E₃ le transfert des communications du satellite S₈ vers le satellite S₉ ne pourra pas s'effectuer pour tous les terminaux. C'est pourquoi on prévoit, de façon analogue, le transfert des communications des terminaux qui ne pourront pas être transférées de S₈ vers S_{9,} vers un satellite S₁₀ de l'ensemble E₂ (flèche F₁). D'autres communications sont transférées du satellite S₁₀ vers le satellite S₈ (flèche F'₁).

C'est la programmation, connue à l'avance, des faisceaux à bord des satellites, et qui correspond au caractère déterministe dans l'espace et dans le temps des trajectoires des satellites, qui permet de traiter collectivement les transferts de communications d'un satellite à un autre pour divers terminaux à l'intérieur de la zone.

Bien que l'invention tire avantage du caractère déterministe de la trajectoire des satellites et de la commande des équipements à bord de ces derniers, elle n'est pas incompatible avec une gestion individuelle des transferts pour régler des problèmes particuliers ou temporaires à certains terminaux. Par exemple, s'il s'avère qu'un terminal normalement prévu pour communiquer par l'intermédiaire d'un satellite donné, à un instant déterminé, ne peut réaliser cette communication en raison d'un masquage, tel qu'un immeuble se trouvant dans le champ de l'antenne ou un obstacle imprévu, ou encore des conditions météorologiques détériorées, la communication pourra être basculée sur un autre satellite et les moyens de commande dans la station de gestion 22, tiendront compte de ce masquage détecté pour, ultérieurement, effectuer le transfert selon des satellites non masqués.

A titre d'exemple encore : s'il s'avère qu'à un instant donné, en raison d'une surcharge momentanée du terminal, la capacité en communications (exprimée en mégabits/seconde) du satellite affectée au terminal est insuffisante, on peut momentanément transférer les communications sur un autre satellite disposant d'une plus grande capacité en communications. On peut aussi devancer le transfert sur le satellite suivant, si celui-ci fournit une plus grande capacité en communications.

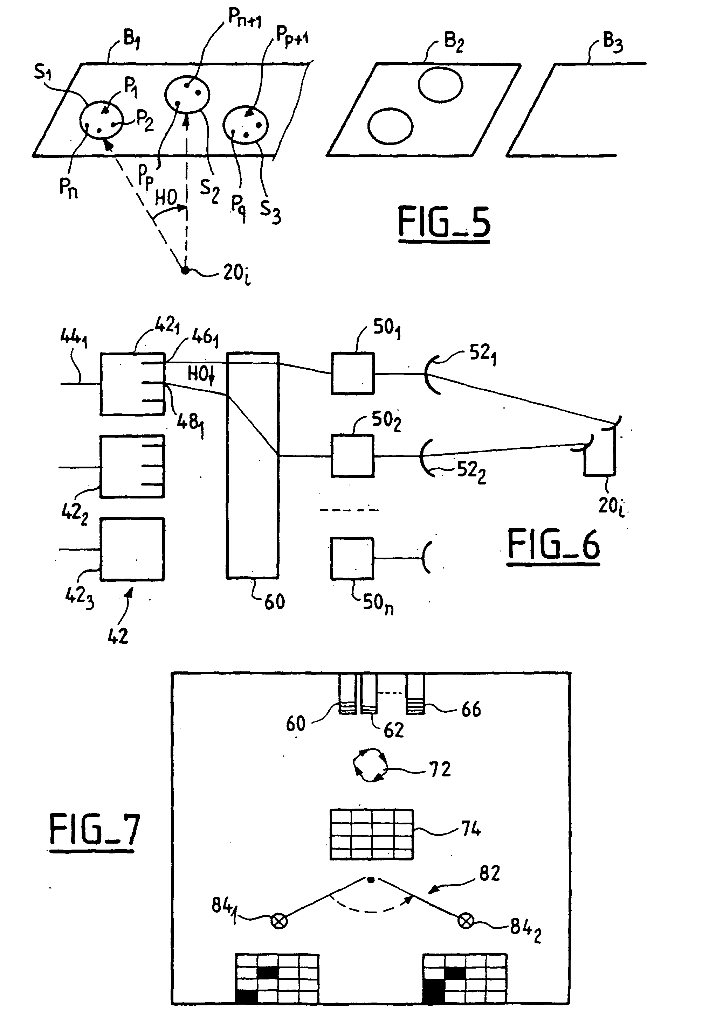

On va maintenant décrire, en relation avec les figures 5 et 6, une autre disposition de l'invention qui consiste à répartir les ressources entre satellites affectés à une zone 20 de manière à simplifier la réalisation de la station de gestion 22.

Avant de procéder à cette description, on rappelle que dans un système de télécommunications du type conforme à l'invention, tous les terminaux doivent pouvoir communiquer entre eux par l'intermédiaire de la station de gestion et doivent aussi pouvoir communiquer avec les terminaux d'un réseau terrestre ou autre relié à la station de gestion 22. Il faut en outre que chaque communication ou chaque paquet puisse emprunter une ressource quelconque du réseau, c'est-à-dire une fréquence porteuse de n'importe quel satellite.

Cette contrainte entraîne des problèmes de gestion des ressources qui ne sont pas simples à résoudre.

Pour résoudre ce problème d'une façon telle, comme indiqué ci-dessus, qu'on puisse simplifier la réalisation de la gestion dans la station 22, on sépare l'ensemble des porteuses dont dispose le système de télécommunications en plusieurs sous-ensembles ou bouquets B₁, B₂, B3 (figure 5), etc. de façon telle qu'un transfert des communications d'un terminal, ou de la station de gestion, d'un satellite vers un autre satellite, ne puisse s'effectuer qu'en transférant la communication d'une porteuse d'un sous-ensemble vers une autre porteuse du même sous-ensemble. On associe ainsi un terminal à un seul sous-ensemble de porteuses.

Sur la figure 5, on a représenté, de façon symbolique, par un rectangle, les ressources B₁ pour un terminal 20ᵢ. On voit sur cette figure que, dans ce cas, trois satellites S₁, S₂ et S₃ sont visibles de ce terminal 20ᵢ et, à ce dernier, est affecté le sous-ensemble B₁ comprenant les porteuses P₁ à P_{q}. Les porteuses P₁ à Pₙ sont affectées au satellite S₁, les porteuses Pₙ₊₁ à Pp sont affectées au satellite S₂ tandis que les porteuses Pₚ₊₁ à P_{q} sont affectées au satellite S₃.

Chacun des satellites S₁, S₂, S₃ peut également communiquer à l'aide des fréquences porteuses ne se trouvant pas dans le sous-ensemble B₁, par exemple le sous-ensemble B₂. Toutefois, ces sous-porteuses ne seront pas utilisées pour les communications du terminal 20ᵢ, mais pour les communications d'autres terminaux tels que le terminal 20ⱼ.

Ainsi, quand une communication du terminal 20_{i,} qui s'effectue par l'intermédiaire du satellite S₁ avec la fréquence porteuse P₂, doit être transférée sur le satellite S₂, la fréquence porteuse qui sera utilisée pour cette communication du terminal 20ᵢ par l'intermédiaire du satellite S₂, sera choisie parmi les fréquences porteuses Pₙ₊₁ à Pₚ faisant partie du sous-ensemble B₁.

Dans la station de gestion 22, on prévoit un dispositif 42 (figure 6) de traitement des porteuses qui permet d'aiguiller le trafic dans cette station 22. Ce dispositif 42 est séparé en autant de parties 42₁, 42₂, etc. qu'il existe de sous-ensembles B₁, B₂, etc. Ce dispositif 42 permet d'effectuer le transfert de communications d'un satellite sur un autre et assure aussi la connexion à d'autres réseaux, par exemple des réseaux terrestres. Dans ces conditions, chaque section 42₁, 42₂, 42₃ du dispositif 42 comporte une entrée/sortie 44₁, 44₂, etc. reliée au(x) réseau(x) terrestre(s) et une pluralité d'entrées/sorties 46₁, 48₁, etc. Dans chaque section 42ᵢ, le nombre de ces entrées/sorties 46ᵢ, 48ᵢ est égal au nombre de porteuses comprises dans le sous-ensemble Bᵢ correspondant.

Par ailleurs, la station 22 comprend un nombre N de modems 50₁ à 50ₙ égal au nombre de porteuses. A chaque modem, est associée une antenne 52₁, 52₂, etc.

La connexion des entrées/sorties 46ᵢ, 48ᵢ, etc. aux modems 50₁, 50₂, etc. est effectuée par l'intermédiaire d'une matrice de connexion 60.

Si, comme représenté, à un instant donné, les communications d'un terminal 20ᵢ sont relayées par le satellite vers lequel est pointée l'antenne 52₁ et avec la porteuse du sous-ensemble B₁ correspondant à la sortie 46₁ de la section 42₁ du dispositif 42, et si cette communication doit être transférée sur le satellite vers lequel est pointée l'antenne 52₂, alors, dans la partie 42₁ du dispositif, on transfère (flèche HO) les communications de l'entrée/sortie 46₁ vers l'entrée/sortie 48₁ et cette entrée/sortie 48₁ est connectée, grâce à la matrice 60, au modem 50₂ et donc à l'antenne 522.

On comprend que cette organisation des porteuses en sous-ensembles permet de simplifier l'organisation du dispositif 42 car celui-ci est composé d'un ensemble de parties ou modules 42₁, 42₂, etc. tous analogues entre eux.

L'invention concerne aussi, un niveau auquel peut s'effectuer le transfert de la communication. Par "niveau", on entend que le Hand-Over peut s'effectuer non pas en amont des mémoires tampons dans lesquelles les cellules ATM sont en attente, mais en aval. Dans la présente réalisation, le transfert s'effectue après l'attribution (multiplexage) des ressources.

Lorsque le transfert s'effectue à l'aval du multiplexage, il est dit transfert "physique", car il est proche des moyens physiques de transmission.

Ainsi, dans le mode de réalisation représenté sur la figure 7, le transfert 82 est effectué au niveau physique, c'est-à-dire après le multiplexage des cellules. On prévoit ainsi un ensemble de mémoires tampons 60, 62, ...66 et un moyen 72 de répartition des ressources 74.

Le basculement 82 des communications d'un chemin à un autre s'effectue directement en aval de l'attribution 74 des ressources. Autrement dit, les mêmes codes et/ou intervalles de temps sont attribués sur chaque chemin. Toutefois, les fréquences porteuses sont différentes.

Chacun des chemins comporte son propre contrôle de puissance. Ce dernier est représenté par un symbole, respectivement 84₁ et 84₂. En effet, la puissance nécessaire pour chaque chemin n'est pas forcément la même.

Pour assurer une transition correcte d'une puissance d'un chemin à un autre, il est préférable de prévoir une période de transition, correspondant, par exemple, à une trame, pendant laquelle les mêmes ressources en codes et/ou intervalles de temps sont attribuées simultanément aux deux chemins avec transmission simultanée des cellules sur les deux chemins pendant un intervalle de cellule. Avant cet intervalle de transition, une puissance nulle est attribuée au deuxième chemin, et après cet intervalle de transition, une puissance nulle est attribuée au premier chemin.

Au cours de l'intervalle de transition, pendant lequel les cellules sont transmises avec une puissance non nulle simultanément sur les deux chemins, il faut contrôler la puissance de façon telle que, sur chaque chemin, la somme des puissances attribuées aux cellules ne dépasse pas la puissance maximale autorisée sur ce chemin. Cette condition n'étant pas aisée à satisfaire, l'instant de transfert des communications sera en général différent d'un terminal à un autre.

Pour mieux faire comprendre le mécanisme de transfert d'une communication d'un chemin à un autre, on décrit ci-après, de façon succincte, les diverses opérations à effectuer.

On rappelle tout d'abord que chaque terminal comporte deux antennes. Ainsi, au cours d'une phase de préparation du transfert, l'antenne en attente de chaque terminal est pointée sur le satellite devant prendre le relais de la communication. Ce pointage peut être effectué avant même l'activation du pinceau du satellite qui prendra le relais.

La synchronisation en temps, en phase et en fréquence du démodulateur sur la fréquence s'effectue après l'allumage du pinceau.

Enfin, au cours de cette phase de préparation, on estime la qualité de la liaison avec le second satellite.

La phase de préparation est suivie par une phase d'attente au cours de laquelle le terminal attend l'ordre du transfert ou basculement que doit lui fournir la station centrale. Cette phase d'attente peut se terminer de façon anticipée si, par exemple, la qualité de liaison se dégrade de façon brusque sur le chemin du premier satellite. Dans ce cas, on bascule rapidement les communications sur le second chemin.

Au cours d'une troisième phase, la station centrale donne l'ordre de transfert ou basculement au terminal. Le terminal accuse réception de cet ordre et, en même temps, fournit une indication précise sur la qualité de liaison avec le second satellite et la puissance de la communication est ajustée. Le basculement s'effectue à l'issue de cette troisième phase.

## Revendications

1. Procédé de télécommunications faisant appel à des satellites terrestres défilants (S₁, S₂, S₃ et S₄) dans lequel la terre est divisée en zones (20ᵢ) à l'intérieur de laquelle les communications des terminaux de cette zone avec le réseau sont relayées par une station de gestion (22) et une communication entre chaque terminal (24₁, 24₂ ...) et la station de gestion s'effectue par l'intermédiaire d'un satellite, un autre satellite prenant le relais de la communication quand le premier satellite n'est plus utilisé, dans lequel, les terminaux étant immobiles, pour commander le transfert des communications d'un satellite à un autre, on fait appel aux moments prédéterminés pendant lesquels au moins deux satellites sont simultanément visibles de la zone, ou d'une partie de la zone, **caractérisé en ce que** les transferts de communications étant effectuées pour une pluralité de terminaux, pour déterminer l'instant du transfert pour chaque terminal, on tient compte des puissances disponibles et/ou de la disponibilité des ressources en communication, les instants de transferts étant commandés de façon à pouvoir être étalés entre les terminaux pendant la période de double visibilité des satellites.

2. Procédé de la revendication 1, **caractérisé en ce que** les transferts de communications des terminaux d'un satellite vers un autre sont commandés à partir de la station de gestion (22).

3. Procédé selon la revendication 1 ou 2, **caractérisé en ce que** les instants des transferts sont répartis de façon que les ressources utilisées par chacun des satellites soient sensiblement les mêmes.

4. Procédé selon l'une quelconque des revendications précédentes, **caractérisé en ce que** les moments de transferts de communications d'un satellite vers un autre sont prédéfinis pour chaque terminal.

5. Procédé selon la revendication 4, **caractérisé en ce qu'**on surveille les qualités des communications de chaque terminal et **en ce que** si la qualité de communication pour un terminal descend en dessous d'un seuil prédéterminé, par exemple en raison d'un masquage, on anticipe le transfert de la communication vers un autre satellite.

6. Procédé selon la revendication 4 ou 5, **caractérisé en ce qu'**on anticipe le transfert de la communication vers l'autre satellite si cet autre satellite permet une capacité de communication supérieure à celle du premier satellite.

7. Procédé selon l'une quelconque des revendications précédentes, **caractérisé en ce que** les zones terrestres (20i) sont fixes.

8. Procédé selon l'une quelconque des revendications précédentes, **caractérisé en ce que** les ressources attribués à un terminal, pour un satellite, comprennent une fréquence porteuse et une pluralité de codes, notamment des séquences de Hadamard, et/ou d'intervalles de temps.

9. Procédé selon l'une quelconque des revendications précédentes, **caractérisé en ce qu'**on prévoit dans chaque terminal et/ou la station de gestion, un seul moyen (72) d'attribution des ressources (74), et **en ce que** ces ressources sont dédoublées pendant la période de transfert.

10. Procédé selon la revendication 9, **caractérisé en ce que** deux cellules ou paquets, ou autres signaux, destinés à être transmis simultanément par l'intermédiaire de deux satellites différents présentent des fréquences porteuses différentes et, de préférence, les mêmes codes.

11. Procédé selon la revendication 9 ou 10, **caractérisé en ce qu'**avant le transfert, on attribue une puissance nulle aux signaux du deuxième chemin et après le transfert, on attribue une puissance nulle aux signaux du premier chemin.

12. Procédé selon la revendication 11, **caractérisé en ce que** pendant une période de transition, par exemple égale à un intervalle de cellule ou de paquet, on attribue des puissances non nulles aux deux ensembles de cellules ou de paquets.

13. Procédé selon l'une quelconque des revendications 9 à 12, **caractérisé en ce qu'**on contrôle les puissances attribuées ou paquets dédoublés.

14. Station de gestion pour système de télécommunication dans lequel on prévoit des zones terrestres, chaque terminal d'une zone communiquant avec le réseau par l'intermédiaire d'une station de gestion dans la zone correspondante, les communications transmises entre la station de gestion et le terminal s'effectuant par l'intermédiaire d'un satellite, des moyens étant prévus dans chaque terminal pour commander le transfert des communications d'un premier satellite vers un second satellite, ladite station comportant des moyens pour commander ledit transfert des communications de terminaux immobiles se trouvant dans la zone, ou dans une partie de la zone, en faisant appel aux moments prédéterminés pendant lesquels, dans cette zone, ou dans une autre partie de la zone, au moins deux satellites sont visibles simultanément, **caractérisée en ce que**, les transferts de communications étant effectuées pour une pluralité de terminaux, elle comporte des moyens pour déterminer les instants des transferts individuels pour chaque terminal en fonction de l'attribution de puissance et/ou de ressources en communication, les instants de transferts étant commandés de façon à pouvoir être étalés entre les terminaux pendant la période de double visibilité des satellites.

15. Station de gestion selon la revendication 14, **caractérisée en ce qu'**elle comporte un dispositif d'attribution des fréquences porteuses aux terminaux, ces fréquences porteuses étant réparties selon des ensembles disjoints, un transfert d'une communication d'un satellite à un autre s'effectuant en choisissant les deux porteuses de la communication dans le même sous-ensemble.

## Claims

1. A telecommunication method using non-geostationary Earth satellites (S₁, S₂, S₃ and S₄) and in which the Earth is divided into areas (20ᵢ) inside which calls involving terminals in this area are relayed by a management station (22) and a communication between each terminal (241, 242, etc.) and the management station is realized via a satellite, another satellite taking over a call when the former satellite is no longer used, wherein the terminals being stationary, for commanding handover of calls from the one satellite to another, use is made of predetermined times during which at least two satellites are simultaneously visible from the area or from a portion of the area, **characterized in that**, call handovers being realized for a plurality of terminals for determining the handover time for each terminal, allowance is made for the power available and/or the availability of communication resources, handover times being commanded so that they can be distributed over all the terminals during the period of double visibility of the satellites.

2. A method according to claim 1, **characterized in that** handover of calls involving the terminals from one satellite to another is commanded from the management station (22).

3. A method according to claim 1 or 2, **characterized in that** the handover times are distributed so that the resources used by each satellite are substantially the same.

4. A method according to any preceding claim, **characterized in that** the times of handover of calls from one satellite to another are predefined for each terminal.

5. A method according to claim 4, **characterized in that** call quality is monitored for each terminal and a call is handed over to another satellite ahead of time if the call quality for a terminal falls below a predetermined threshold, for example because of masking.

6. A method according to claim 4 or 5, **characterized in that** a call is handed over to another satellite ahead of time is said other satellite provides a communication capacity greater than that of the former satellite.

7. A method according to any preceding claim, **characterized in that** the terrestrial areas (20ᵢ) are fixed.

8. A method according to any preceding claim, **characterized in that** the resources allocated to a terminal for a satellite include a carrier frequency and a plurality of codes, especially Hadamard sequences, and/or time slots.

9. A method according to any preceding claim, **characterized in that** a single system (72) for allocating resources (74) is provided in each terminal and/or the management station and said resources are duplicated during a handover period.

10. A method according to claim 9, **characterized in that** two cells, packets or other signals to be relayed simultaneously via two different satellites have different carrier frequencies and preferably the same codes.

11. A method according to claim 9 or claim 10,
**characterized in that** zero power is allocated to signals on the second path before handover and zero power is allocated to signals on the first path after handover.

12. A method according to claim 11, **characterized in that** non-zero powers are allocated to both sets of cells or packets during a transition period, for example equal to a cell or packets time slot.

13. A method according to any one of claims 9 to 12, **characterized in that** the powers allocated to the duplicated cells or packets are monitored.

14. A management station for a telecommunication system in which terrestrial areas are defined, each terminal in an area communicating with the telecommunication system via a management station in the corresponding area, calls between the management station and the terminals being relayed via a satellite, means being provided in each terminal for commanding handover of calls from a first satellite to a second satellite, said station including means for commanding said handover of calls involving stationary terminals in the area, or in a portion of the area, using predetermined times at which at least two satellites are visible simultaneously in that area or in another portion of that area, **characterized in that**, the handovers of calls being realized for a plurality of terminals, it comprises, for determining individual handover times for each terminal a function of the allocation of power and/or communication resources, periods of handover from one satellite to another being commanded so that they can be distributed over all the terminals during the period of double visibility of the satellites.

15. A management station according to claim 14,
**characterized in that** it includes a system for allocating the terminals carrier frequencies divided into non-contiguous subsets, two carriers from the same subset being chosen to handover a call from one satellite to another.

## Patentansprüche

1. Telekommunikationsverfahren unter Verwendung von terrestrischen, vorbeiziehenden Satelliten (S₁, S₂, S₃ und S₄), bei welchem die Erde in Zonen (20ᵢ) unterteilt wird, in deren Innern die Kommunikation der Terminals dieser Zone mit dem Netz durch eine Lenkrelaisstation (22) übertragen wird und eine Kommunikation zwischen jedem Terminal (24₁, 24₂, ...) und der Lenkstation mittels eines Satelliten erfolgt, wobei ein anderer Satellit die Kommunikationsübertragung übernimmt, wenn der erste Satellit nicht mehr nutzbar ist, wobei die Terminals unbeweglich sind, zum Steuern der Übertragung der Kommunikation von einem Satelliten auf einen anderen vorbestimmte Momente benutzt werden, während denen wenigstens zwei Satelliten gleichzeitig in der Zone, oder einem Teil der Zone, sichtbar sind, **dadurch gekennzeichnet, dass** die Übertragungen der Kommunikation für eine Vielzahl von Terminals erfolgt, wobei zum Bestimmen des Übertragungsmoments für jedes Terminal die verfügbaren Leistungen und/oder die Verfügbarkeit der Kommunikationsressourcen berücksichtigt werden, wobei die Momente der Übertragungen so gesteuert werden, dass sie zwischen den Terminals während der Periode der doppelten Sichtbarkeit verteilt werden können.

2. Verfahren nach Anspruch 1, **dadurch gekennzeichnet, dass** die Übertragungen der Kommunikation der Terminals von einem Satelliten auf einen anderen durch die Lenkstation (22) gesteuert werden.

3. Verfahren nach Anspruch 1 oder 2, **dadurch gekennzeichnet, dass** die Momente der Übertragungen so verteilt werden, dass die von jedem Satelliten genutzten Ressourcen im Wesentlichen gleich sind.

4. Verfahren nach einem der vorhergehenden Ansprüche, **dadurch gekennzeichnet, dass** die Momente der Übertragungen der Kommunikation von einem Satelliten auf einen anderen für jedes Terminal vorbestimmt sind.

5. Verfahren nach Anspruch 4, **dadurch gekennzeichnet, dass** die Qualität der Kommunikation von jedem Terminal überwacht wird, und dass, wenn die Qualität der Kommunikation für ein Terminal unterhalb eines vorbestimmten Schwellwerts fällt, beispielsweise aufgrund einer Abschattung, die Übertragung der Kommunikation zu einem anderen Satelliten vorweg genommen wird.

6. Verfahren nach Anspruch 4 oder 5, **dadurch gekennzeichnet, dass** die Übertragung der Kommunikation zu einem anderen Satelliten vorweg genommen wird, wenn dieser andere Satellit eine Kommunikationskapazität oberhalb von jener des ersten Satelliten ermöglicht.

7. Verfahren nach einem der vorhergehenden Ansprüche, **dadurch gekennzeichnet, dass** die terrestrischen Zonen (20ᵢ) fest sind.

8. Verfahren nach einem der vorhergehenden Ansprüche, **dadurch gekennzeichnet, dass** die einem Terminal für einen Satelliten zugewiesenen Ressourcen eine Trägerfrequenz und eine Vielzahl von Codes, insbesondere Hadamard-Sequenzen und/oder Zeitintervalle, umfassen.

9. Verfahren nach einem der vorhergehenden Ansprüche, **dadurch gekennzeichnet, dass** in jedem Terminal und/oder Lenkstation ein einziges Mittel (72) zum Zuweisen von Ressourcen (74) vorgesehen ist, und dass diese Ressourcen während der Übertragungsperiode entdoppelt werden.

10. Verfahren nach Anspruch 9, **dadurch gekennzeichnet, dass** zwei Zellen oder Pakete oder andere Signale, welche mittels zweier verschiedener Satelliten gleichzeitig übertragen werden sollen, verschiedene Trägerfrequenzen und vorzugsweise die gleichen Codes aufweisen.

11. Verfahren nach Anspruch 9 oder 10, **dadurch gekennzeichnet, dass** vor der Übertragung den Signalen des zweiten Pfads eine Null-Leistung zugewiesen wird und nach der Übertragung den Signalen des ersten Pfads eine Null-Leistung zugewiesen wird.

12. Verfahren nach Anspruch 11, **dadurch gekennzeichnet, dass** während einer Übertragungsperiode, welche zum Beispiel einem Zellen- oder Paketintervall gleich ist, den beiden Ensembles der Zellen oder Pakete Nicht-Null-Leistungen zugewiesen werden.

13. Verfahren nach einem der Ansprüche 9 bis 12, **dadurch gekennzeichnet, dass** die zugewiesenen Leistungen oder entdoppelten Pakete kontrolliert werden.

14. Lenkstation für ein Telekommunikationssystem, in welchem terrestrische Zonen vorgesehen sind, wobei jedes Terminal einer Zone mittels einer Lenkstation in der zugehörigen Zone mit dem Netz kommuniziert, die Kommunikation zwischen der Lenkstation und dem Terminal mittels eines Satelliten übertragen wird, Mittel in jedem Terminal vorgesehen sind, um die Übertragung der Kommunikation von einem ersten Satelliten auf einen zweiten Satelliten zu steuern, wobei die Station Mittel zum Steuern der Übertragung der Kommunikation der sich in der Zone, oder in einem Teil der Zone befindlichen festen Terminals aufweist, wobei vorbestimmte Momente benutzt werden, während denen in dieser Zone, oder einem anderen Teil der Zone, wenigstens zwei Satelliten gleichzeitig sichtbar sind, **dadurch gekennzeichnet, dass** die Kommunikationsübertragungen für eine Vielzahl von Terminals durchgeführt wird, sie Mittel zum Bestimmen der individuellen Übertragungsmomente als Funktion der Zuweisung von Leistung und/oder Kommunikationsressourcen für jedes Terminal aufweist, wobei die Momente der Übertragungen so gesteuert werden, dass sie zwischen den Terminals während der Periode der doppelten Sichtbarkeit der Satelliten verteilt werden können.

15. Lenkstation nach Anspruch 14, **dadurch gekennzeichnet, dass** sie eine Vorrichtung zur Zuweisung von Trägerfrequenzen an Terminals aufweist, wobei diese Trägerfrequenzen entsprechend getrennter Ensembles verteilt werden, eine Übertragung einer Kommunikation von einem Satelliten auf einen anderen erfolgt, indem die beiden Träger der Kommunikation in dem gleichen Unterensemble gewählt werden.
